# EUROPEAN PATENT SPECIFICATION

(11) **EP 3 331 351 B1**
(45) Date of publication and mention of the grant of the patent: **29.11.2023**
(21) Application number: 16831830.1
(22) Date of filing: 28.07.2016
(51) Int. Cl.: A01G 31/02, A01K 61/70, A01G 9/28, C02F 3/32

(54) **FLOATING ECOSYSTEM**
SCHWEBENDES ÖKOSYSTEM
ÉCOSYSTÈME FLOTTANT

(30) Priority: 07.08.2015 GB 201514020; 11.03.2016 GB 201604229
(43) Date of publication of application: 13.06.2018
(73) Proprietor: Biomatrix Water Solutions Limited, Moray Highland IV36 2AB (GB)
(72) Inventor: FULFORD, Galen Yarrow, Moray Highland IV36 2AB (GB)
(74) Representative: Lincoln IP
(86) International application number: PCT/GB2016/052328
(87) International publication number: WO 2017/025711

(56) References cited:
- WO-A1-2009/154539
- WO-A2-2008/094772
- KR-A- 20120 081 446
- KR-B1- 100 761 876
- US-A1- 2003 049 392
- US-A1- 2005 183 331
- US-A1- 2012 118 214

## Description

The present invention relates to ecosystems which support planted media, and in particular provides a ecosystem, or a system of ecosystems, which float and may be used in the treatment of contaminated water, wastewater, aquaculture, potable water, industrial water, habitat provision, water gardening, as well as for the remediation of polluted water bodies.

### Background to the invention

Over 50% of rivers and waterways in urban areas are lined with vertical engineered edges, typically of concrete, steel, brick or stone. These edges provide limited opportunities for aquatic ecosystems with emergent macrophyte to establish themselves and their associated invertebrate and aquatic communities to thrive.

The challenge of managing water quality and providing habitat and aquatic amenity in these conditions is well known in the field. It is an objective of the presentation invention to overcome the challenges of these types of conditions through the provision of a modular floating ecosystem which may be installed along steep engineered waterways banks or other locations where establishing to establish ecosystems in these types of locations with minimal civil work.

More than 80% of sewage in developing countries goes un-treated. Furthermore, businesses and agricultural contribute to water pollution in both rural urban and industrial centres. Water contamination is recognised as a global problem; fresh water resources can be jeopardised - and may already be limited - and there are environmental concerns too such as degradation of coastal waters and estuaries.

The challenge of managing water quality, with new treatment plants is substantial and is well known in the field. The known challenges include treating diffuse pollution, managing changing water levels, coping with flood conditions and establishing habitat and vegetation in deep waters, establishing habitat and vegetation in areas where natural river banks are absent.

The applicant has previously developed integrated water treatment systems for use in the treatment of contaminated water and the like, which is more focused on heavily polluted water bodies requiring aeration. For example, as shown in British Patent Publication Number GB2489037A, which include one or more modules adapted to float in a body of water, one or more attached growth media elements for suspension in the body of water; and one or more aeration devices suspended from the modules for aerating the body of water, and to generate water flow where the one or more attached growth media elements are disposed within the water flow.

Attached growth media elements may be engineered, or alternatively may be natural and provided for example by living plants and roots. The integrated water treatment systems may also support planted ecologies, for example to establish a high volume of root mass as live substrate attached growth treatment media. Planted media may also replenish oxygen diffused by aeration equipment, and may also provide a primary filter to malodorous gases.

KR100761876B1 discloses an artificial floating island in which water purification aquatic plants are planted in a plurality of coir rolls disposed within a floating frame. KR20120081446A discloses another artificial floating island that is capable of depth of water modulation by controlling the buoyancy of the floating frame. Within the floating frame is disposed a soil support part which contains soil (retained by a net member such as a wire netting) for planting aquatic plants which can be submerged by lowering the floating frame.

It is an object of embodiments of the present invention to provide improvements and enhancements in the structure and/or materials of floating ecosystems which better support live substrate for attached growth treatment media and/or plant media. Other benefits and advantages will become apparent from the following description.

### Summary of the invention

According to a first aspect of the invention, there is provided an ecosystem, the ecosystem comprising two or more elongate members which are arranged side-by-side and define one or more corresponding elongate planting lanes of the ecosystem therebetween.

The ecosystem is a floating ecosystem for deployment in a body of water.

The elongate members are resilient. The elongate members are closely spaced. Adjacent elongate members are proximal to one another to provide structural support to plants located in the planting lane.

Preferably, the elongate members are substantially parallel. Alternatively, the elongate members are substantially concentric.

Optionally, the elongate members are selected to provide a pre-determined resilience. For example, the elongate members may be compressible to 50% of their original width and may return to at least 90% of their original width.

The elongate members may comprise an inner expansion layer and an outer containing layer to provide resilience to the elongate members

Note that the ecosystem may also be referred to as an island. Accordingly, the terms ecosystem and island may be used interchangeably without deviating from the scope of the invention defined herein. Furthermore, side-by-side, whether substantially parallel, substantially concentric, or otherwise shall be understood to include any arrangement of the elongate members, provided that planting lanes are provided between the elongate members.

The planting lanes allow the insertion of plants along the length of the ecosystem with a predefined lateral separation.

The planting lanes may be adapted, arranged, configured to or otherwise receive one or more plants within them. Preferably, the one or more plants may extend through the planting lanes such that their roots may penetrate through the ecosystem.

Preferably, the ecosystem comprises three or more elongate members which may be straight, angled or curved defining an offset curve, parallel or spiralling pattern which define two or more corresponding planting lanes therebetween.

Alternatively, or additionally, the ecosystem may comprise at least one continuous elongate member arranged to form the elongate side-by-side, substantially parallel or substantially concentric members. In a particular embodiment a single continuous elongate member is arranged to define the plurality of elongate members. The single continuous elongate member may follow a spiral path or a serpentine path. Optionally, the or an additional continuous elongate member is arranged to define a boundary of the floating ecosystem.

Optionally, the elongate members are buoyant. Optionally, the elongate members may comprise one or more of closed cell foam material, closed or sealed plastic bubbles, closed or sealed vessels which may be purpose made or constructed from recycled vessels, bundles of strips of buoyant material and woven buoyant matting. Elongate planting lanes, and (optionally buoyant) elongate members may be arranged in a linear fashion, or in curving concentric parallel arcs, offset curves or spirals according to the specifics of the intended shape. The term side-by-side shall be understood to include concentric dependent on such arrangement.

Optionally, the elongate members may be hollow. The elongate members may be cylindrical. Accordingly, the elongate members may be tubular. The elongate members may of course comprise any cross-sectional shape, including circular, elliptical, hexagonal or otherwise. Hollow elongate members may define a void which optionally provides an animal habitat. Alternatively, or additionally, buoyant material may be disposed within at least a portion of the hollow elongate members to provide buoyancy.

Preferably, the elongate members comprise a resilient material. The resilient material may be comprised in a sheet from which the elongate members are formed. Alternatively, or additionally, the elongate members contain or house a resilient member or members therein. Preferably, the elongate members comprise a protective material.

Preferably, the elongate members comprise a wicking material. The wicking material may include a capillary moisture wicking layer.

Preferably, the elongate members comprise an insect-impermeable material. Optionally, the elongate members comprise a plant-impermeable material.

Most preferably, the elongate members comprise a multilayer material, which may comprise one or more of a resilient layer, an inner skin layer, an outer skin layer, and a protective outer mesh layer. In a preferred embodiment the multilayer material comprises a resilient inner layer, an inner skin layer, an outer skin layer, and a protective outer mesh layer.

Optionally the elongate members may be arranged so that the members closest to the centre of the ecosystem are greater in height so as to provide a mounded effect to the ecosystem component. Alternatively, or additionally, elongate members may be stacked or otherwise arranged to achieve a desired height or different heights of the ecosystem and, optionally, a desired depth or different depths of planting lanes.

Optionally, the ecosystem comprises a planting media, which may be composite, and which may comprise one or a combination of organic material and inorganic material. The planting media may comprise one or more of lignin based fibres, coir fibres, wood fibres, cellulose, plastic fibres and a plastic mesh which may be woven or non-woven. The organic material and inorganic material may be combined by intertwining, weaving, felting, moulding, crimping or be comprised in a textured mesh, layers may be bound and stabilised and secured through binding laminating, needle felting, melting or gluing for example with elements such as guar gum or polyacrylamide, latex, lime or concrete slurry.

Optionally the planting media may contain a hydrophilic wicking media layer.

Preferably, the planting media is comprised in an outer layer of the
ecosystem. Alternatively, and or additionally, the planting media is comprised in a packing media within the ecosystem. Optionally, the planting media is located within one or more planting lanes within the ecosystem.

Optionally, the ecosystem comprises an internal packing media disposed within the ecosystem and/or in the planting lanes. The packing media may comprise one or more of coir fibres, plastic fibres, mineral coated fibres, soil, bio-char, sphagnum moss, rock dust, lignin based fibres, plastic balls and plastic bottles. The packing media may be folded or stuffed into the floating ecosystem. The packing media may comprise a combination of organic and inorganic planting material.

Optionally, the ecosystem comprises a structural mesh or scrim. Preferably, the structural mesh surrounds the ecosystem. Preferably, the structural mesh retains components of the ecosystem within the ecosystem. Preferably, the mesh permits plants to be inserted through the mesh into planting media comprised in the ecosystem.

The structural mesh may comprise one or more of a thermoplastic net, stainless steel mesh, aperture sheet and supporting grid.

Optionally the structural mesh top layer, may be joined to the bottom mesh layer by means of a pre-cut tie, of pre-bent metal wire or other tensile tufting material.

Optionally, the ecosystem further comprises a base layer. Preferably, the base layer supports the ecosystem. The base layer may provide structural rigidity, and or containment of the base of the system. Preferably, the base layer comprises one or more apertures, to permit plant root penetration. The one or more apertures may coincide with the planting lanes. The base layer may comprise one or more mesh layers. One such mesh layer may retain soil and/or detritus within the ecosystem. The same, or another, mesh layer may provide structural support to the ecosystem. The same, or another, mesh layer may permit plant roots to pass therethrough to be suspended in a body of water in which the ecosystem, which in that case is most preferably a floating ecosystem, is disposed.

Optionally the ecosystem structure may comprise a peripheral edging which may incorporate a steel wire rope which may provide a high strength perimeter means of connecting individual ecosystem components together.

Optionally, the ecosystem further comprises a framework. The framework may comprise a plurality of members connected at their ends. The members may comprise lengths or sections of pipe sealed at their ends so as to provide a vertical flange by which the members may be connected to one another. The members may be buoyant. Alternatively, the framework may comprise a single tubular member joined at its ends. The single member may comprise a material substantially the same as the material of the elongate members. Optionally, the single member is contiguous with one or more of the elongate members. The framework comprising a single member may be filled with buoyant material.

In a preferred embodiment of the first aspect, an ecosystem, which may float, comprises one or more continuous cylindrical or tubular lengths of material arranged to form substantially parallel or concentric elongate members, wherein the material and/or matter contained within the elongate members is resilient so as to retain matter in the planting lanes between the substantially parallel or concentric elongate members. In an alternative embodiment of the first aspect, an ecosystem, which also may float, comprises a sheet of material which is pleated or ruffled to form a plurality of elongate members and a corresponding plurality of elongate planting lanes therebetween, wherein at least an upper portion of the pleated or ruffled sheet is resilient so as to retain matter in the planting lanes, and wherein a lower portion of the pleated or ruffled sheet forms a base of the ecosystem. The lower portion may permit roots to pass therethrough and retain planting media in the ecosystem.

Planting material may be retained in a space bounded by the elongate members and a base of the ecosystem. Plants may be retained, and supported, between the elongate members. The floating ecosystem may further comprise a frame which defines a boundary of the floating ecosystem and provides the floating ecosystem with structural support and/or buoyancy.

Embodiments of the first aspect of the invention may comprise features corresponding to any of the essential, preferred or optional features of any other aspect of the invention or vice versa.

According to a second aspect of the present disclosure, there is provided a floating ecosystem for deployment in a body of water, the floating ecosystem comprising a planting media which comprises a combination of organic material and inorganic material.

Note that the planting media may alternatively be defined as comprising a combination of biodegradable and nonbiodegradable material, or a combination of non-durable and durable material.

The organic, biodegradable and/or non-durable material initially provides natural planting media for improved plant establishment then makes way for root spread and plant growth as it decays, while the inorganic, non-biodegradable and/or durable material provides initial and optionally ongoing physical support.

Preferably, the planting media is comprised in an outer layer of the floating ecosystem. Alternatively, or additionally, the planting media is comprised in a packing media within the floating ecosystem.

Optionally, the floating ecosystem comprises a plurality of substantially parallel members which define one or more corresponding planting lanes therebetween.

Optionally, the planting media is located within the one or more planting lanes.

Embodiments of the second aspect of the present disclosure may comprise features corresponding to any of the essential, preferred or optional features of any other aspect of the invention or vice versa.

According to a third aspect of the present disclosure, there is provided a floating ecosystem for deployment in a body of water, the floating ecosystem comprising a plurality of side-by-side, substantially parallel, concentric or offset curved members which define one or more corresponding planting lanes therebetween, and a composite planting media which comprises a combination of organic material and inorganic material.

Optionally, the planting media occupies the one or more planting lanes.

Embodiments of the third aspect of the present disclosure may comprise features corresponding to any of the essential, preferred or optional features of any other aspect of the invention or vice versa.

According to a fourth aspect of the present disclosure, there is provided a system of floating ecosystems comprising a plurality of floating ecosystems according to any preceding aspect.

Optionally, the plurality of floating ecosystems may be connected. Alternatively, the plurality of floating ecosystems may be separate.

Embodiments of the fourth aspect of the present disclosure may comprise features corresponding to any of the essential, preferred or optional features of any other aspect of the invention or vice versa.

According to a fifth aspect of the present disclosure, there is provided a method of installing a floating ecosystem or floating ecosystem system, comprising providing a floating ecosystem or floating ecosystem system according to any preceding aspect, and deploying the floating ecosystem or floating ecosystem system within a body of water.

Optionally, the method comprises providing one or more plants within the planting lanes of the floating ecosystem or floating ecosystem system. The plants may be provided before deploying the floating ecosystem or floating ecosystem system within the body of water, during or alternatively after deploying the floating ecosystem or floating ecosystem system within the body of water.

Embodiments of the fifth aspect of the present disclosure may comprise features corresponding to any of the essential, preferred or optional features of any other aspect of the invention or vice versa.

According to a sixth aspect of the present disclosure, there is provided a planting media which comprises a combination of organic, biodegradable and/or non-durable material and an inorganic, non-biodegradable and/or durable material.

Embodiments of the sixth aspect of the present disclosure may comprise features corresponding to any of the essential, preferred or optional features of any other aspect of the invention, and particularly the first and second aspect, or vice versa.

According to another aspect of the present disclosure, there is provided a floating ecosystem or a floating ecosystem system substantially as described herein with reference to the appended drawings.

According to a further aspect of the present disclosure, there is provided a planting media or a planting layer substantially as described herein with reference to the appended drawings.

### Brief description of the drawings

There will now be described, by way of example only, various embodiments of the invention with reference to the drawings, of which:
Figure 1 illustrates a cross-sectional side view of a floating water treatment ecosystem according to an embodiment of at least one aspect of the present invention;
Figure 2 illustrates a cross-sectional side view of another floating water treatment ecosystem according to an embodiment of at least one aspect of the present invention;
Figure 3 illustrates a cross-sectional side view of a further floating water treatment ecosystem according to an embodiment of at least one aspect of the present invention;
Figure 4 illustrates a cross-sectional side view of a yet further floating water treatment ecosystem according to an embodiment of at least one aspect of the present invention;
Figure 5 illustrates a cross-sectional side view of yet another variant of the floating water treatment ecosystem according to an embodiment of at least one aspect of the present invention;
Figure 6 illustrates a cross-sectional side view of a sixth example of a floating water treatment ecosystem according to an embodiment of at least one aspect of the present invention;
Figure 7 illustrates a cross-sectional side view of a seventh example of a floating water treatment ecosystem, in which Figure 7b illustrates a cross-sectional side view of a variant of the seventh example of the water treatment ecosystem which does not necessarily float, both according to embodiments of at least one aspect of the present invention;
Figure 8 illustrates in plan view examples of ecosystems which may be formed by shaping a single, continuous elongate member according to embodiments of at least one aspect of the present invention; and
Figure 9 illustrates a cross-sectional side view of an eighth example and a variant of an ecosystem according to an embodiment of at least one aspect of the present invention.

### Detailed description of preferred embodiments

In the following description, same or like reference numerals refer to corresponding features in the various embodiments used to illustrate one or more aspects of the invention.

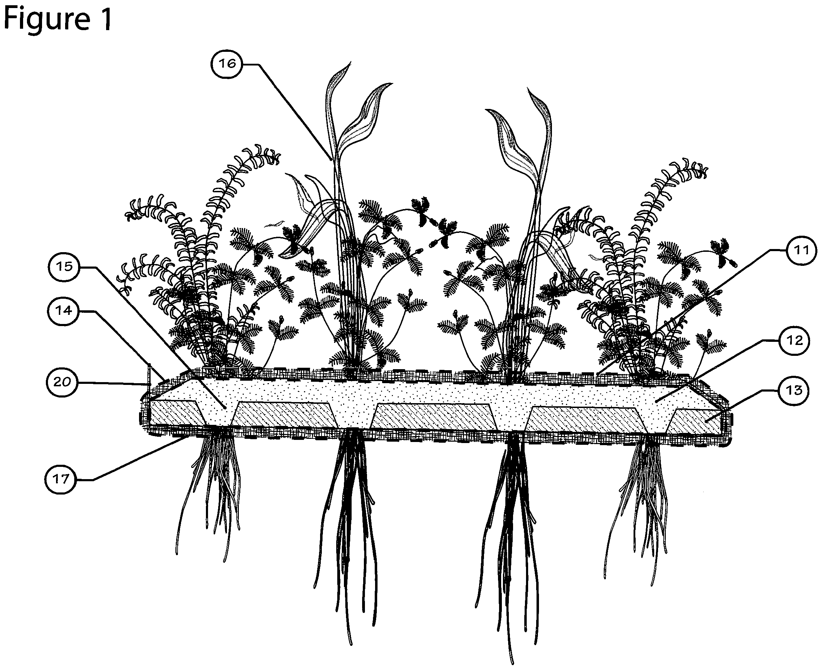

Figure 1 illustrates a cross-sectional side view of a floating ecosystem 1 in accordance with an embodiment of at least one aspect of the present invention.

The ecosystem 1 can be seen to comprise a series of parallel members 13 which define, therebetween, a series of corresponding channels or planting lanes 15. These planting lanes 15 allow the insertion of plants 16 along the length of the ecosystem 1 at a predefined lateral separation. The longitudinal separation of plants 16 disposed within a same planting lane 15 can be chosen or varied dependent on the desired effect. For example, it allows plants to be planted in variable densities, such as closer together for small plants and further apart for larger plants.

The top or outer layer 11 of the ecosystem comprises a layer comprising a combination of organic and inorganic materials; this material is inherently partially biodegradable and partially durable. In this embodiment the different materials are interlinked, but may be combined in any manner which permits the advantages of the combination to be realised and exploited. The organic material, which may comprise coir fibres and/or wood fibres for example, provides natural planting media for improved plant establishment. While plants become established the organic material slowly decays, making way for root spread and plant growth. The inorganic material, which may comprise plastic fibres and/or a plastic non-woven mesh for example, provides long lasting and non-biodegradable planting media for durability and continued physical support. Furthermore, after the organic material has decayed, the remaining inorganic planting media is inherently, and may be significantly, porous.

In this particular embodiment the organic and inorganic materials are combined by intertwining respective fibres. However, the materials may be woven together, needle felted, laminated, moulded, comprise a three dimensional crimped material, or a textured mesh material.

Within the body of the ecosystem 1 is disposed a porous packing media 12 which also occupies the planting lanes 15 and provides physical support to the ecosystem and also to any plants 16 accommodated within the ecosystem. The packing media 12 may comprises coir fibres, plastic fibres, mineral coated fibres, lignin based fibres, plastic balls, plastic bottles or any other suitable material, and may be packed into the body of the ecosystem for example by folding or stuffing. Note that the packing media 12 may alternatively comprise the same or a similar material as the top or outer layer 11; i.e. a combination of organic and inorganic materials.

The parallel members 13 which define the planting lanes 15 may be buoyant core members which provide buoyancy to the ecosystem. These may be constructed from closed cell foam, closed or sealed plastic bubbles or vessels, bundles of buoyant strips, woven buoyant matting, or any other suitable material. For example, rows of plastic bottles or the like may be employed and provide a modular way of achieving a desired length, width and height of the buoyant parallel members. Length, width and height may be consistent or varied throughout the ecosystem.

Surrounding the body of the ecosystem 1 and effectively holding the top or outer layer 11 in place around the other components of the ecosystem is a structural tensioning mesh layer 14. The mesh layer 14, while providing structural support and retaining materials within the body of the ecosystem 1, allows plants 16 to be inserted and/or grow through the structural tensioning layer which the mesh 14 provides. The mesh layer 14 in this embodiment comprises a thermoplastic woven or non-woven net. However, the mesh layer 14 may instead (or additionally) comprise a metal mesh, such as a stainless steel mesh, suitable for deployment in a body of water. Alternatively, an apertured sheet or supporting grid may be employed.

Additional structural support is provided by a supporting base layer 17. The supporting base layer 17 may comprise a same or similar material as the top or outer layer 11. A substantially solid/continuous base layer may be employed, in which case elongate apertures corresponding to the planting lanes 15 may be provided.

The advantages of any individual feature described herein, or any combination thereof, may be exploited in a floating water treatment ecosystem or system without necessarily requiring all such features to be present. In other words, any combination of the features described above and elsewhere has been envisaged by the applicant.

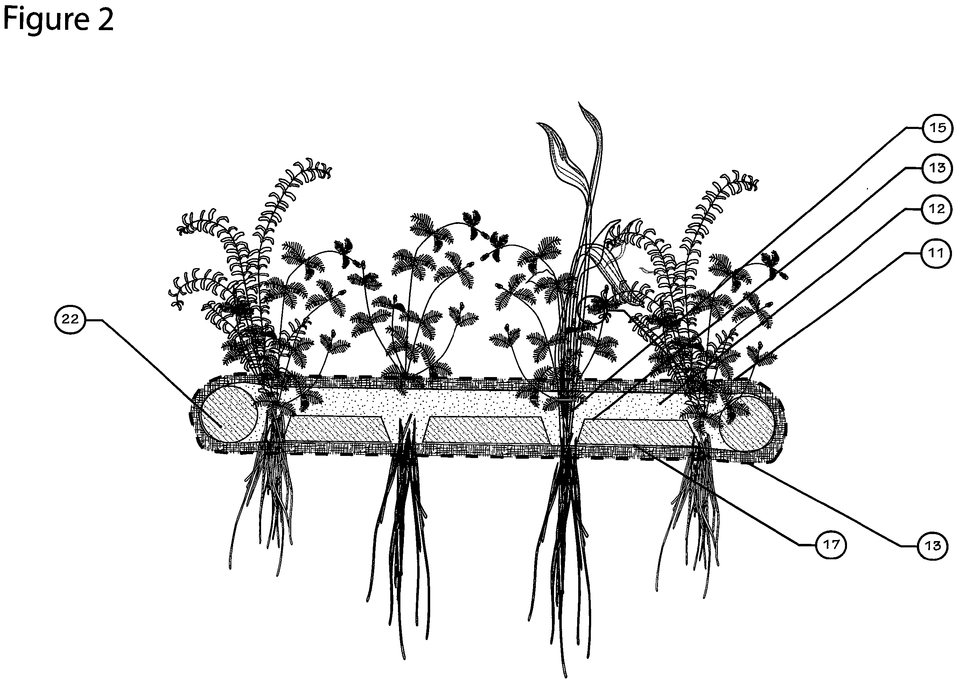

It is also foreseen that in addition to the structural support provided by a supporting base layer and/or a structural tensioning mesh layer, additional structural support may be provided by incorporating a scrim, multiple scrims, or a framework. The framework may also provide the ecosystem 1 with buoyancy in addition to, or indeed alternatively to, the parallel members. As such, it is envisaged that the parallel members need not be buoyant. The structural tensioning mesh layer may also encapsulate the framework and in addition the top or outer layer 11 of the ecosystem (which comprises a combination of organic and inorganic materials) may also surround or wrap over the framework. The framework may also serve to define the shape of the ecosystem and provide means for connecting two or more ecosystems together. Figure 2 illustrates a variant of the floating water treatment ecosystem shown in Figure 1 in which a framework 22 is provided that provides buoyancy as well as structural support to the floating ecosystem 1.

In another exemplary embodiment, not shown, a framework is provided with a series of six rows of sealed vessels, in this case plastic bottles, or sealed sections of plastic pipe. Custom floating structures of variable buoyancy and complex design may now be achieved while maintaining strength. Higher buoyancy can be achieved by using larger diameter internal members and greater structural rigidity and strength can be achieved by using greater wall thickness. Of course, four lengths of plastic pipe may be used to provide a quadrilateral shape such as a rectangle or square shape of ecosystem.

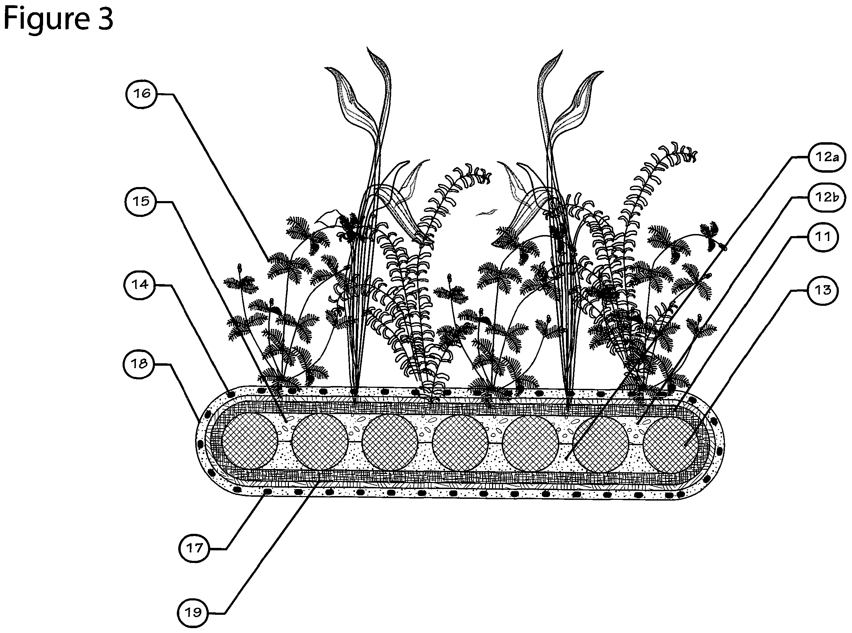

Whereas in the embodiments shown in Figures 1 and 2 the internal members 13 are trapezoidal, the embodiment shown in Figure 3 employs internal members 13 of circular cross-section. In fact, any shape of internal members 13 may be employed.

The ecosystem 1 shown in Figure 3 also comprises multiple layers 17, 18, 19 surrounding the internal members 13. In this embodiment, layer 17 comprises a tensile scrim material, layer 18 comprises a binding surface coating, and layer 19 comprises an organic fibre layer. Of course, any number or combination of such, similar and further layers may be employed dependent on the circumstances and/or environmental considerations.

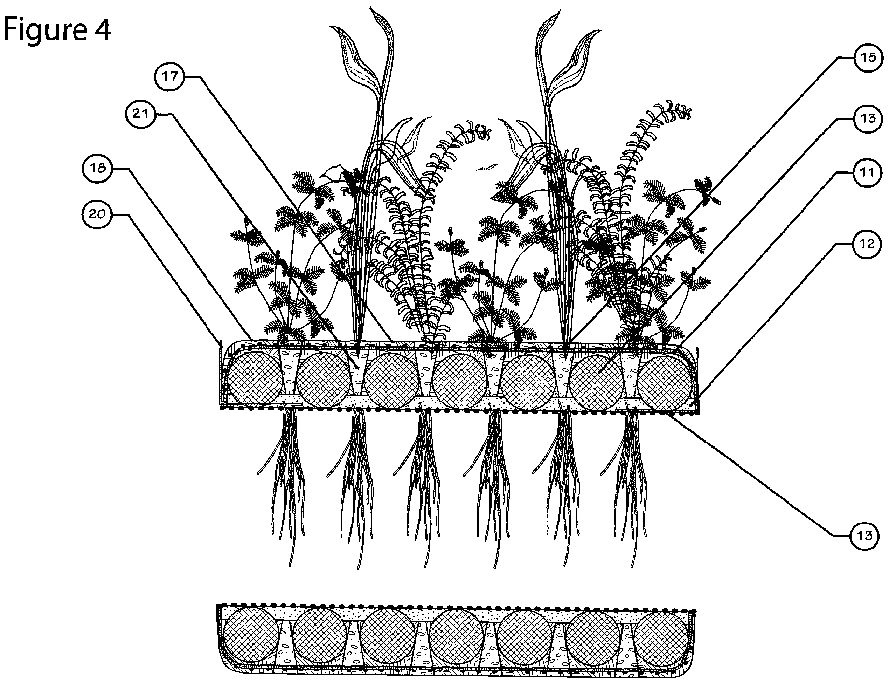

Figure 4 shows another alternative embodiment of the invention which employs rounded parallel internal members 13, which may be cast upside down or layered up in upright position. Figure 4b shows the embodiment of Figure 4 as it may be assembled, through inverted casting in to an upside down mould; after casting and locating the component parts in their respective positions the ecosystem may simply be inverted for the insertion of plants 16 and/or disposal in a body of water.

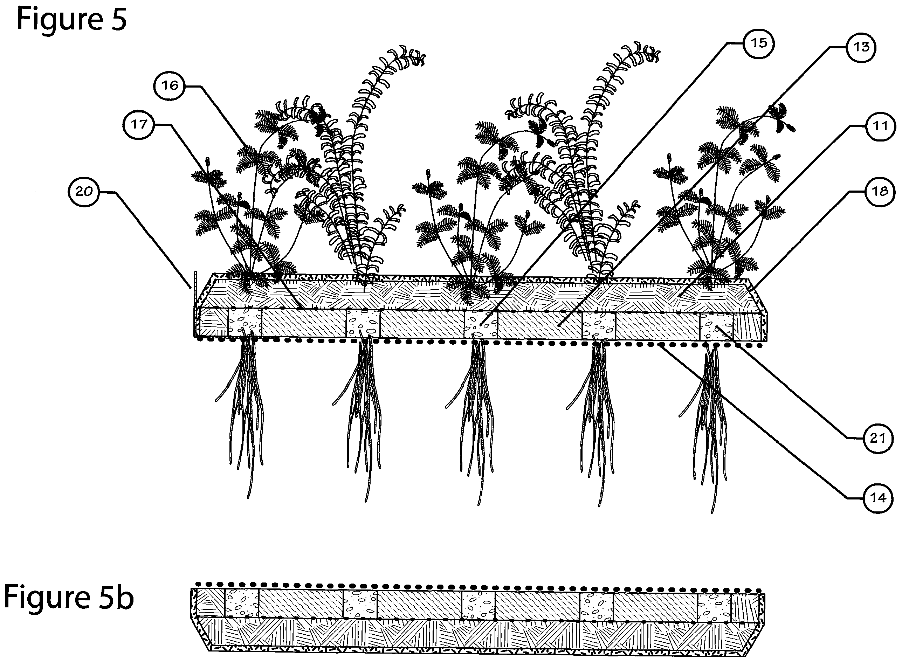

Figure 5 shows a further example of an ecosystem which may be produced in a casting process, where the biodegradable and durable element 11 is made by utilising a pre-cast, pre-dried lignin based fibre and concrete slurry board, where the lignin fibre provides the biodegradable aspect of the element and the concrete slurry mix binds the wood fibre together and provides the durable / non biodegradable aspect of the element. Additives to the slurry mix may include elements including, Portland cement, lime, bio-char, bacterial, seed or spore inoculants, natural binding agents, colouring agents, rock dust, or similar non toxic additives.

Alternatively the biodegradable and durable elements as described above may be layered in to a mould upside down, and the parallel members and planting lanes pressed in to position from the topside, as illustrated in Figure 5b.

A binding surface material 18 may be applied either by spraying or layering the surface material down as the first layer in the mould with the composite material added on top or by applying the surface material after the unit has been removed from the mould through application to the top surface with spray applicator or other means.

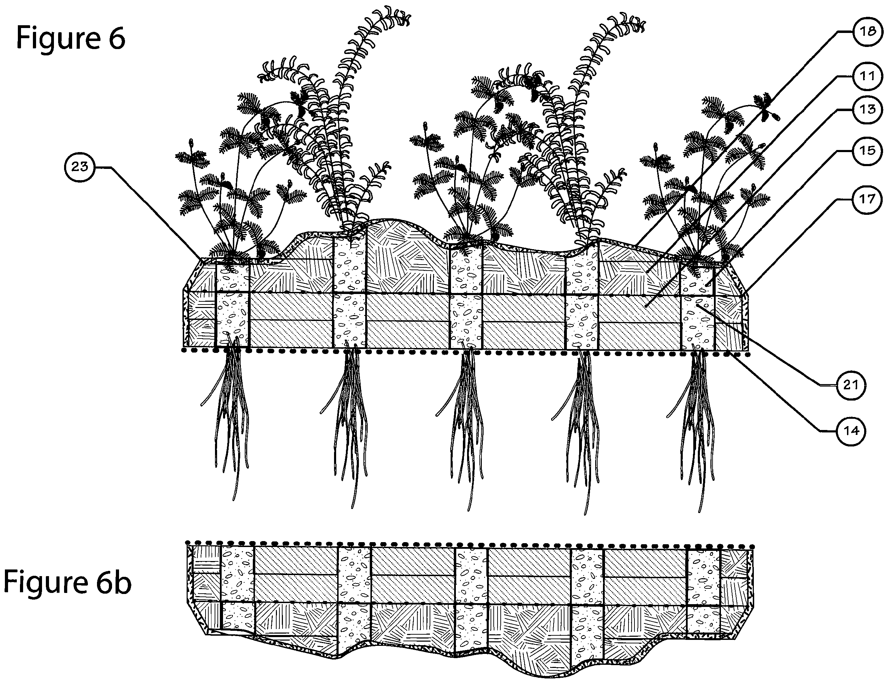

In other embodiments of the invention, which may be variations of any embodiment described or envisioned above or elsewhere herein, the ecosystem may be provided with moisture conveying or moisture wicking layers. Figure 6 illustrates an embodiment of the invention in which wicking material 23 is disposed in and around the ecosystem 1. Integration of moisture wicking material can mean that irrigation is not required as the ecosystem may be self watering. This embodiment and the embodiment shown in Figure 5 are also provided with growth media 21 to support, for example, bacterial growth, small plant growth and/or treatment biofilms.

In this embodiment, the biodegradable and durable element 11 is made by utilising a concrete or other binder to form a slurry mix; binding biodegradable fibre of several grades together and thus providing a permeable and partially biodegradable but durable element. Again, additives to the slurry mix may include elements including, Portland cement, lime, bio-char, bacterial, seed or spore inoculants, natural binding agents, colouring agents, rock dust, or similar non toxic additives. As contrasted with the embodiments shown in Figures 4 and 5, the top surface (which is the bottom surface during casting) is irregular in shape. Such irregular shape may lend an organic and hence more natural appearance to the ecosystem. The specific shape - irregular or regular - may be chosen at least partly based on aesthetic considerations.

In these embodiments the ecosystem may be produced by casting in a pre-fabricated mould, typically made from fiberglass or plastic or metal. A finishing topcoat binder may be applied to the top surface once the casting process is complete.

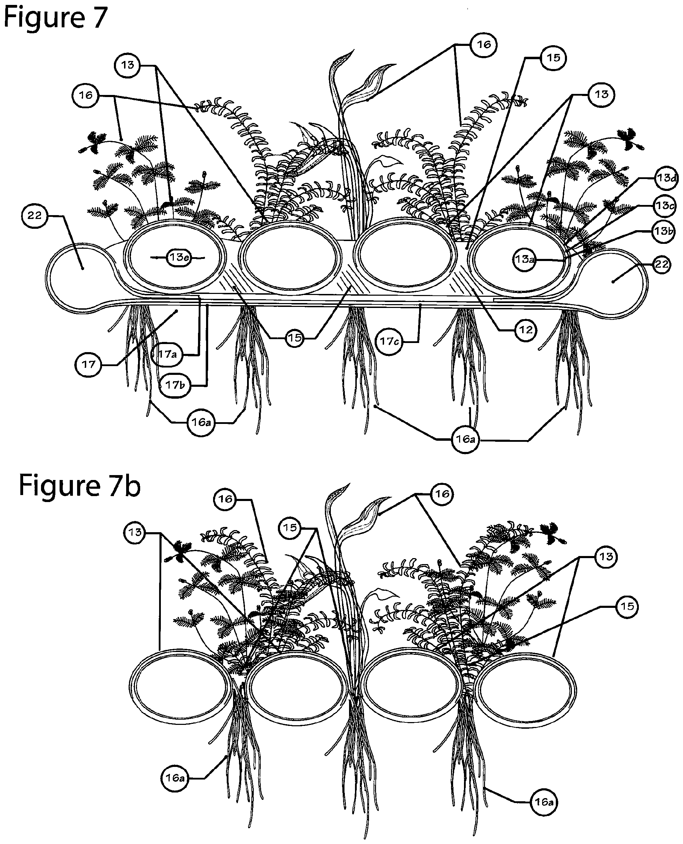

Figure 7 shows another alternative embodiment in which the ecosystem is produced by creating rolls or cylinders of material to form the elongate members 13 which, as with previous embodiments, define therebetween a series of corresponding channels or planting lanes 15.

The elongate members 13 themselves comprise a resilient inner layer 13a, an inner skin layer 13b, an outer skin layer 13c and a protective outer mesh later 13d. The resilient inner layer 13a provides the elongate members 13 with an overall resilience which allows them to deform, for example when inserting a plant 16 between adjacent members 13, and spring back to hold the inserted plant 16 in place. The resilience of the inner layer 13a also serves to press the inner skin layer 13b and the outer skin layer 13c together and against the protective outer mesh layer 13d.

These members 13 provide firm support to plants 16 disposed in the planting lanes 15 without the need for stakes or ties. This support is provided regardless of the size of the plant and beneficially may be gentle when the plant is young or a small plug and, as the plant grows to maturity, of increasing firmness as may be required. While each plant is effectively supported as if it were contained in a basket, the resilience does not overly constrain lateral growth (i.e. in a direction perpendicular to the planting lanes), and as the planting lanes 15 are themselves continuous there is no constraint along the lanes 15.

This does away with the need to pot, re-pot, and potentially re-position plants as they grow. Furthermore, by permitting root expansion in a downwards direction significant root masses can be accommodated. Another benefit of the resilient nature of the elongate members is that puddling is prevented while supporting a thick planting layer.

The inner skin layer 13b may comprise a wicking material or geotextile, felt, and/or may be at least partially biodegradable and wicking. As noted above, wicking enables the ecosystem to be at least partially self-watering and may do away with the need for irrigation. Preferably, it is permeable by roots and worms (below the outer skin layer 13c - see below) but serves as an insect barrier.

The outer skin layer 13c, which extends over at least the upper half of the elongate members 13 may comprise a coir blanket, felt and/or polyactide (PLA) layer. This may be impermeable to plants and plant roots so as to contain growth and prevent domination by the most vigorous plants and also limit the opportunity for growth of weeds between planted species.

Note that the internal void space 13e within the elongate members 13 in the present embodiment may, with appropriate access provided, serve as a habitat for amphibious creatures such as frogs and newts or, if suitably large, other aquatic or semiaquatic animals such as otters.

Between the elongate parallel members 13, and within the planting lanes 15, is shown an optional planting media infill 12 which comprises (for example) one or a mixture of coir, wood fibre, cocoa peat, peat, sphagnum moss, live moss, soil and/or wood chip materials.

Around the perimeter of the ecosystem is provided a sealed float chamber 22 that provides buoyancy as well as structural support to the floating ecosystem 1. A base layer 17 extends between opposing sides of the float chamber 22. The base layer comprises a top mesh 17a, a bottom mesh 17b, and optionally base materials 17c such as foam, wood chip, barley straw and/or coir disposed between the top mesh 17a and the bottom mesh 17b. The base layer 17 supports the elongate parallel members 13 and the optional planting media infill 12, as well as any plants 16 which are located in the planting lanes 15 and any plant roots 16a which extend therethrough.

In this embodiment, the top mesh 17a is a 1 cm mesh to provide media support and soil and/or detritus retention, whereas the bottom mesh 17b is simply a structural mesh to provide physical support and define a bottom surface of the ecosystem 1 (although roots 16a may of course protrude below the bottom surface and extend into a body of water in which the ecosystem is disposed).

This embodiment provides significant advantages over prior art arrangements, some of which are shared with previous embodiments and some of which may be unique to this embodiment (and variants). Multiple tiers of planting are provided which can accommodate different but adjacent moisture requirements. For example, the infill 12 may define an aquatic planting zone in which the planting media is saturated bounded by the base layer 17 and where adjacent elongate members 13 touch or are closest together. A moist planting zone may be provided above this point where soil is moist but not saturated. Surface planting is accommodated by the surfaces of the elongate members themselves. In this way, various plant types (land, aquatic, mosses etc.) can be planted or accommodated next to one another for with aesthetic benefits and biodiversity advantages.

Note that the above-mentioned sealed float chamber 22 may, in an alternative embodiment, be formed by joining together the ends of a long roll or cylinder of material (similar to that which forms the elongate members 13 to form a loop. The internal void space within the roll or cylinder can be filled with buoyant material such as foam. In fact, the float chamber 22, and even the base 17, could be omitted (as shown in Figure 7b), and as mentioned elsewhere in the present application the advantages of the present invention may be enjoyed by ecosystems which do not necessarily float - although floating or buoyant ecoystems could be equally deployed on land if required or desired. In the embodiment shown in Figure 7b, which could also float and be deployed on water if desired, the planting media infill 12 has been omitted. If deployed on land the ground or soil may take the place of the base 17 and/or planting media infill 12 as appropriate and the roots 16a would simply extend into the ground or soil.

As noted above, the elongate members and the parallel planting lanes or channels which they define (in any of the above described embodiments) may be arranged in a linear fashion, or may be arranged in curving or concentric parallel arcs, offset curves or spirals according to the specifics of the intended shape. The term parallel shall be understood to include concentric dependent on such arrangement.

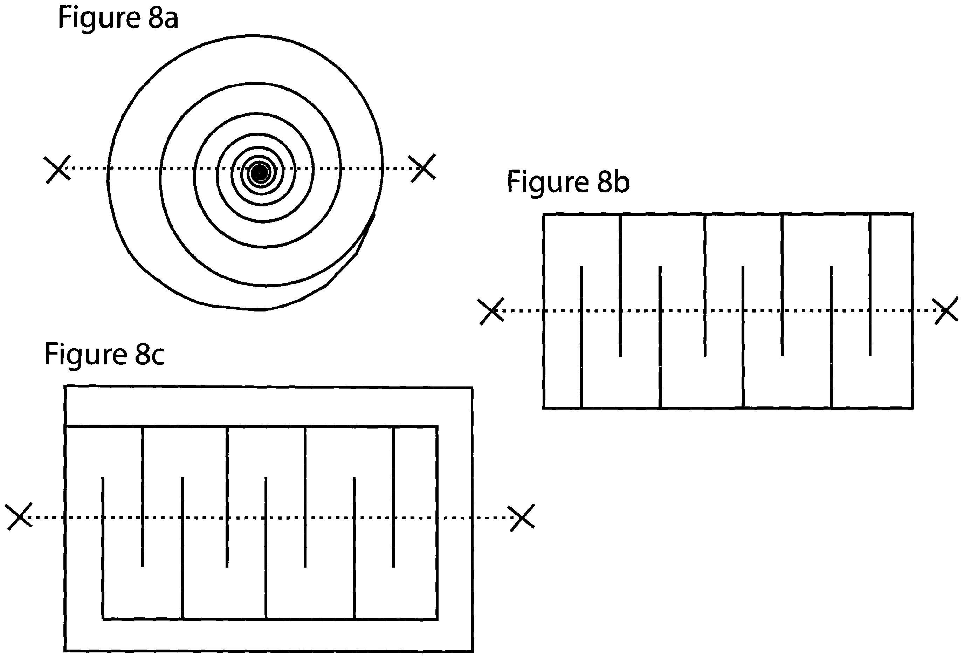

In one such alternative example, which enjoys benefits of various aspects and embodiments of the invention, it is foreseen that a single continuous roll or cylinder of material similar to that which forms the individual elongate members 13 in the Figure 7 embodiment can be arranged in a spiral which would define an overall circular or elliptical ecosystem (see Figure 8a). Alternatively, the continuous roll or cylinder of material could be pleated or arranged in a serpentine manner by which it folds back upon itself several times to define a generally square or rectangular ecosystem (see Figure 8b). In the example shown in Figure 8c a final length of the roll or cylinder of material is wrapped around the perimeter to define a boundary or integral perimeter frame. This portion of the roll or cylinder of material could be filled with buoyant material so as to effect a buoyant perimeter frame, just as the outermost loop of the spiral shown in Figure 8a might. Similar arrangements could be employed to define a hexagonal ecosystem or indeed achieve any shape, with or without integral perimeter frames. In each case, there will be provided parallel (or concentric) planting lanes 15 between adjacent portions of the elongate member as described with reference to earlier embodiments.

It will be apparent that a cross-section through X-X of each of the embodiments shown in Figures 8a-8c may resemble the cross-sections illustrated in Figures 7a and 7b.

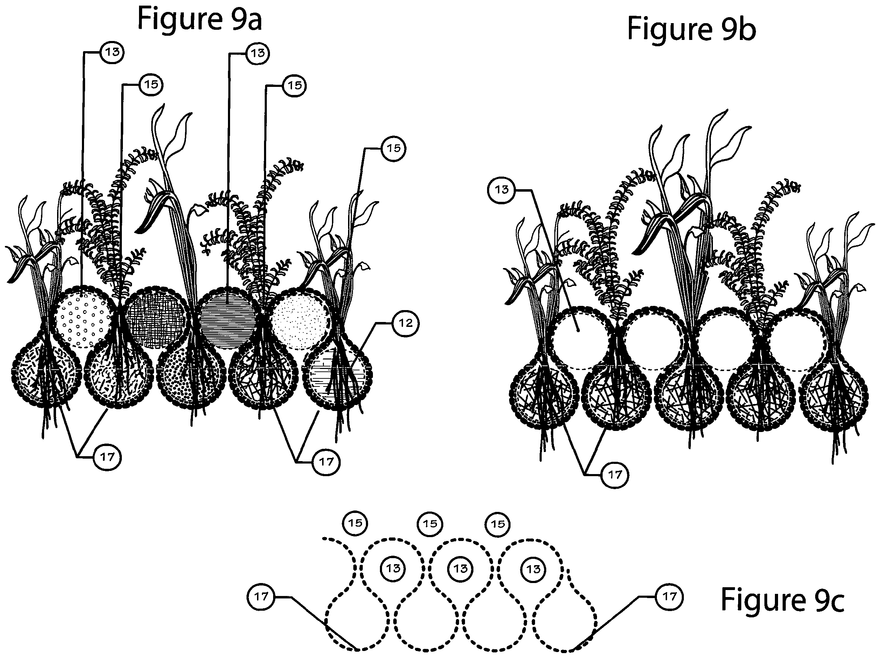

The elongate members 13 and corresponding planting lanes 15 may be realised in another manner as illustrated in Figure 9. A single sheet may be laterally pleated or ruffled in a manner clearly shown in Figure 9c to produce an ecosystem as shown in Figures 9a and 9b. Here, the side-by-side elongate members 13 are provided by the upper half of the pleated sheet and the planting lanes 15 are defined between the elongate members 13 and extend to a base 17 provided by the lower half of the pleated sheet. The lower half of the pleated sheet may be used to contain planting infill 12 to support plant growth and supply nutrients etc. to plants disposed in the planting lanes 15.

Note that the single sheet may be a single layer construction or consist of a multilayer construction corresponding to any of the materials described with reference to previous embodiments. As before, it is particularly advantageous if the sheet and/or the material from which the sheet is formed is resilient so as to lend a corresponding resilience to the elongate members for the reasons described above. Alternatively, the sheet can simply be flexible and a material or object/objects located within the elongate members can lend resilience. For example, the elongate members may house or contain foam cylinders which may also assist in shaping the sheet into the desired configuration.

Again, this ecosystem may be configured or arranged to float, or may not necessarily float, depending on the circumstances and particular application. In Figure 9a for example the elongate members can be filled with porous or buoyant material which would enable the ecosystem to float. Alternatively, the elongate members could be hollow and substantially empty as illustrated in Figure 9b. This may itself lend buoyancy to the ecosystem overall, or it may simply be deployed on land.

Embodiments described herein enable the buoyancy of the ecosystem to be well-controlled and well-defined, and by determining the manner in which planted media can be disposed within the ecosystem, an even buoyancy can be maintained. Furthermore, ecosystems according to the invention provide a highly porous planting media and environment for plants to thrive while also preventing mosquitos from propagating on the surface of a body of water in which the ecosystem or ecosystems are deployed.

As anticipated above, a number of floating ecosystems may be deployed within a body of water to provide a system of floating ecosystems. These floating ecosystems may be connected together or allowed to move on the surface of the body of water independently of one another. Different ecosystems may be provided with different plants or varieties of plants dependent on aesthetic and/or practical requirements. Such ecosystems may, for example, be aesthetically appealing yet provide water treatment capabilities reducing pollution and protecting the environment, without the need to compromise on form or function. Likewise, a number of land-based ecosystems may be connected together or arranged proximal to one another. It is also notable that the arrangement of planting lanes in parallel (or concentric) rows is particularly suited to horticultural and/or agricultural growing applications; for example, ecosystems of the kind described herein may find application in the growth of row crops such as potatoes, cotton, maize (corn), beans and beets - whether on a floating ecosystem, land-based ecosystem, or indeed any other location where such an ecosystem may be deployed.

Note that the ecosystems illustrated in Figures 1, 4 and 5 are provided with optional connections 20 which enable same, similar or different ecosystems to be joined to one another. Note that any number of different ecosystems may be joined in any shape, manner or form, dependent on the desired effect and, for example, the shape of the body of water and/or aesthetic considerations.

The invention provides an ecosystem, which may float for deployment in a body of water, the ecosystem comprising a number of elongate members which are arranged side-by-side and define one or more corresponding elongate planting lanes between them. These planting lanes allow for the insertion and support of plants at predetermined lateral separations. The invention also provides a material or component which is partially biodegradable and partially durable and/or non-biodegradable; the biodegradable portion initially provides natural planting media for improved plant establishment then makes way for root spread and plant growth as it decays.

The foregoing description of the invention has been presented for the purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims.

## Claims

1. A floating ecosystem (1) for deployment in a body of water, the ecosystem comprising two or more elongate members (13) which are arranged side-by-side to define one or more corresponding elongate planting lanes (15) of the floating ecosystem therebetween, wherein the elongate members (13) are resilient and adjacent elongate members (13) are proximal to one another to provide structural support to plants (16) located in the planting lane (15).

2. The ecosystem (1) of claim 1, wherein the elongate members (13) are substantially parallel or substantially concentric.

3. The ecosystem (1) of any preceding claim, wherein the elongate members (13) comprise an inner expansion layer (13a) and an outer containing layer (13b) which provide resilience to the elongate members (13).

4. The ecosystem (1) of any preceding claim, wherein the ecosystem (1) further comprises a framework comprising a plurality of members connected at their ends, wherein the members comprise lengths or sections of pipe sealed at their ends so as to provide a vertical flange by which the members may be connected to one another, and wherein the members are buoyant.

5. The ecosystem (1) of any preceding claim, wherein the ecosystem (1) comprises at least one continuous elongate member (13) arranged to follow a spiral path or serpentine path to form the elongate side-by-side, substantially parallel or substantially concentric members.

6. The ecosystem (1) of any preceding claim, wherein the elongate members (13) are tubular.

7. The ecosystem (1) of any preceding claim, wherein buoyant material is disposed within at least a portion of the hollow elongate members (13) to provide buoyancy.

8. The ecosystem (1) of any preceding claim, wherein the elongate members (13) are stacked or otherwise arranged to achieve a desired height or different heights of the ecosystem and, optionally, a desired depth or different depths of planting lanes (15).

9. The ecosystem (1) of claim 1, wherein planting media (12) is comprised in an outer layer of the ecosystem (1) and/or in a packing media within the ecosystem (1).

10. The ecosystem (1) of claim 1, wherein planting media (12) is located within one or more planting lanes (15) within the ecosystem (1).

11. The ecosystem (1) of any preceding claim, wherein the ecosystem (1) comprises a structural mesh or scrim (17a) which surrounds the ecosystem (1) and retains components of the ecosystem (1) within the ecosystem (1), wherein the mesh permits plants (16) to be inserted through the mesh into planting media (12) comprised in the ecosystem (1).

12. The ecosystem (1) of any preceding claim, wherein the ecosystem (1) further comprises a base layer (17) which supports the ecosystem (1), provides structural rigidity, and/or containment of the base of the system (1), wherein the base layer (17) comprises one or more apertures, to permit plant root penetration, and wherein the one or more apertures coincide with the planting lanes (15).

13. The ecosystem (1) of claim 1, comprising a sheet of material which is pleated or ruffled to form a plurality of elongate members (13) and a corresponding plurality of elongate planting lanes (15) therebetween, wherein at least an upper portion of the pleated or ruffled sheet is resilient so as to retain matter in the planting lanes, and wherein a lower portion of the pleated or ruffled sheet forms a base of the ecosystem (1).

14. The ecosystem (1) of claim 13, wherein the lower portion permits roots to pass therethrough and retain planting media in the ecosystem (1).

15. The ecosystem (1) of any preceding claim, wherein planting material (12) is retained in a space bounded by the elongate members (13) and a base of the ecosystem (1).

## Patentansprüche

1. Ein schwimmendes Ökosystem (1) zum Einsatz in einem Gewässer, wobei das Ökosystem zwei oder mehr längliche Elemente (13) umfasst, die so nebeneinander angeordnet sind, dass sie dazwischen eine oder mehrere entsprechende längliche Pflanzgassen (15) des schwimmenden Ökosystems zudefinieren, wobei die länglichen Elemente (13) elastisch sind und benachbarte längliche Elemente (13) nahe beieinander liegen und so den Pflanzen (16), die sich in der Pflanzgasse (15) befinden, eine strukturelle Unterstützung bieten.

2. Das Ökosystem (1) nach Anspruch 1, wobei die länglichen Elemente (13) im Wesentlichen parallel oder im Wesentlichen konzentrisch sind.

3. Das Ökosystem (1) nach einem der vorhergehenden Ansprüche, wobei die länglichen Elemente (13) eine innere Ausdehnungsschicht (13a) und eine äußere Aufnahmeschicht (13b) umfassen, die den länglichen Elementen (13) Elastizität verleihen.

4. Das Ökosystem (1) nach einem der vorhergehenden Ansprüche, wobei das Ökosystem (1) zudem ein Gerüst umfasst, das mehrere an ihren Enden verbundene Elemente umfasst, wobei die Elemente Längen oder Abschnitte von Rohren umfassen, die an ihren Enden versiegelt sind, um einen vertikalen Flansch bereitzustellen, wodurch die Elemente miteinander verbunden werden können und wobei die Elemente schwimmfähig sind.

5. Das Ökosystem (1) nach einem der vorhergehenden Ansprüche, wobei das Ökosystem (1) mindestens ein durchgehendes längliches Element (13) umfasst, das so angeordnet ist, dass es einem Spiralpfad oder Serpentinenpfad folgt, um die länglichen Elemente Seite an Seite, im Wesentlichen parallel oder im Wesentlichen konzentrisch zu bilden.

6. Das Ökosystem (1) nach einem der vorhergehenden Ansprüche, wobei die länglichen Elemente (13) röhrenförmig sind.

7. Das Ökosystem (1) nach einem der vorhergehenden Ansprüche, wobei schwimmfähiges Material in mindestens einem Teil der hohlen länglichen Elemente (13) angeordnet ist, um für Auftrieb zu sorgen.

8. Das Ökosystem (1) nach einem der vorhergehenden Ansprüche, wobei die länglichen Elemente (13) gestapelt oder auf andere Weise angeordnet sind, um eine gewünschte Höhe oder unterschiedliche Höhen des Ökosystems und optional eine gewünschte Tiefe oder unterschiedliche Tiefen der Pflanzgassen (15) zu erreichen.

9. Das Ökosystem (1) nach Anspruch 1, wobei das Pflanzmedium (12) in einer äußeren Schicht des Ökosystems (1) und/oder in einem Verpackungsmedium innerhalb des Ökosystems (1) enthalten ist.

10. Das Ökosystem (1) nach Anspruch 1, wobei sich das Pflanzmedium (12) innerhalb einer oder mehrerer Pflanzgassen (15) innerhalb des Ökosystems (1) befindet.

11. Das Ökosystem (1) nach einem der vorhergehenden Ansprüche, wobei das Ökosystem (1) ein strukturelles Netz oder Gittergewebe (17a) umfasst, das das Ökosystem (1) umgibt und Komponenten des Ökosystems (1) innerhalb des Ökosystems (1) festhält, wobei das das Netz das Einsetzen von Pflanzen (16) durch das Netz in Pflanzmedium (12), das im Ökosystem (1) enthalten ist, ermöglicht.

12. Das Ökosystem (1) nach einem der vorhergehenden Ansprüche, wobei das Ökosystem (1) zudem eine Basisschicht (17) umfasst, die das Ökosystem (1) stützt, für strukturelle Steifigkeit und/oder Eindämmung der Basis des Systems (1) sorgt, wobei die Basisschicht (17) eine oder mehrere Öffnungen umfasst, um das Eindringen von Pflanzenwurzeln zu ermöglichen, und wobei die eine oder die mehreren Öffnungen mit den Pflanzgassen (15) zusammenfallen.

13. Das Ökosystem (1) nach Anspruch 1, das eine Materialbahn umfasst, die gefaltet oder gekräuselt ist, um eine Vielzahl länglicher Elemente (13) und eine entsprechende Vielzahl länglicher Pflanzgassen (15) dazwischen zu bilden, wobei mindestens ein oberer Teil der gefalteten oder gekräuselten Bahn elastisch ist, um Material in den Pflanzgassen festzuhalten, und wobei ein unterer Teil der gefalteten oder gekräuselten Bahn eine Basis des Ökosystems (1) bildet.

14. Das Ökosystem (1) nach Anspruch 13, wobei der untere Teil es den Wurzeln ermöglicht, hindurchzugehen und Pflanzmedium im Ökosystem (1) festzuhalten.

15. Das Ökosystem (1) nach einem der vorhergehenden Ansprüche, wobei Pflanzmaterial (12) in einem Raum festgehalten wird, der durch die länglichen Elemente (13) und eine Basis des Ökosystems (1) begrenzt wird.

## Revendications

1. Un écosystème flottant (1) destiné à être déployé dans un plan d'eau, l'écosystème comprenant deux ou plusieurs éléments allongés (13) qui sont disposés côte à côte pour définir un ou plusieurs couloirs de plantation allongés correspondants (15) de l'écosystème flottant entre eux, dans lequel les éléments allongés (13) sont résilients et les éléments allongés adjacents (13) sont proches les uns des autres pour fournir un support structurel aux plantes (16) situées dans le couloir de plantation (15).

2. L'écosystème (1) de la revendication 1, dans lequel les éléments allongés (13) sont pratiquement parallèles ou pratiquement concentriques.

3. L'écosystème (1) de l'une des revendications précédentes, dans lequel les éléments allongés (13) comprennent une couche d'expansion intérieure (13a) et une couche de confinement extérieure (13b) qui assurent la résilience des éléments allongés (13).

4. L'écosystème (1) de l'une des revendications précédentes, dans lequel l'écosystème (1) comprend en outre un cadre comprenant plusieurs éléments reliés à leurs extrémités, dans lequel les éléments présentent des longueurs ou des sections de tuyau scellées à leurs extrémités de manière à fournir une bride verticale grâce à laquelle les éléments peuvent être reliés les uns aux autres et dans lequel les éléments flottent.

5. L'écosystème (1) de l'une des revendications précédentes, dans lequel l'écosystème (1) comprend au moins un élément allongé continu (13) disposé pour suivre une trajectoire en spirale ou en serpentin afin de former les éléments allongés côte à côte pratiquement parallèles ou pratiquement concentriques.

6. L'écosystème (1) de l'une des revendications précédentes, dans lequel les éléments allongés (13) sont tubulaires.

7. L'écosystème (1) de l'une des revendications précédentes, dans lequel un matériau flottant est disposé à l'intérieur d'au moins une partie des éléments allongés creux (13) pour assurer la flottabilité.

8. L'écosystème (1) de l'une des revendications précédentes, dans lequel les éléments allongés (13) sont empilés ou disposés de manière à obtenir la ou les hauteurs souhaitées pour l'écosystème et, éventuellement, la ou les profondeurs souhaitées pour les couloirs de plantation (15).

9. L'écosystème (1) de la revendication 1, dans lequel le milieu de plantation (12) est compris dans une couche extérieure de l'écosystème (1) et/ou dans un milieu de couverture à l'intérieur de l'écosystème (1).

10. L'écosystème (1) de la revendication 1, dans lequel le milieu de plantation (12) se trouve dans un ou plusieurs couloirs de plantation (15) à l'intérieur de l'écosystème (1).

11. L'écosystème (1) de l'une des revendications précédentes, dans lequel l'écosystème (1) comprend un maillage ou un filet structurel (17a) qui entoure l'écosystème (1) et retient les composants de l'écosystème (1) à l'intérieur de l'écosystème (1) et dans lequel les plantes (16) peuvent être insérées à travers le maillage dans le milieu de plantation (12) compris dans l'écosystème (1).

12. L'écosystème (1) de l'une des revendications précédentes, dans lequel l'écosystème (1) comprend en outre une couche de base (17) qui soutient l'écosystème (1), assure la rigidité structurelle et/ou le confinement de la base du système (1), dans lequel la couche de base (17) comprend une ou plusieurs ouvertures pour permettre la pénétration des racines des plantes et dans lequel la ou les ouvertures coïncident avec les couloirs de plantation (15).

13. L'écosystème (1) de la revendication 1, comprenant une feuille de matériau plissée ou froissée pour former plusieurs membres allongés (13) et plusieurs couloirs de plantation allongés correspondants (15) entre eux, dans lequel au moins une partie supérieure de la feuille plissée ou froissée est résiliente de manière à retenir la matière dans les couloirs de plantation et dans lequel une partie inférieure de la feuille plissée ou froissée forme la base de l'écosystème (1).

14. L'écosystème (1) de la revendication 13, dans lequel la partie inférieure permet aux racines de traverser et de retenir le milieu de plantation dans l'écosystème (1).

15. L'écosystème (1) de l'une des revendications précédentes, dans lequel le milieu de plantation (12) est retenu dans un espace délimité par les éléments allongés (13) et la base de l'écosystème (1).
